# EUROPEAN PATENT APPLICATION

(11) **EP 1 855 364 A1**
(43) Date of publication of application: **14.11.2007**
(21) Application number: 06830897.2
(22) Date of filing: 27.01.2006
(51) Int. Cl.: H02G 1/04, H02G 1/06, H02G 7/05, H02G 7/00, H01B 1/02, H01B 1/08, H01B 9/00

(54) **MACHINE FOR TIGHTENING THE CONDUCTOR CABLES OF OVERHEAD ELECTRICAL LINES**

(30) Priority: 28.01.2005 ES 200500162
(71) Applicant: Sociedad Anonima de Preformados Metalicos, 31868 Izurdiaga-Irurzun (Navarra) (ES)
(72) Inventor: RUIZ DE ERENTXUN IBERO, Carlos, E-31868 Izurdiaga-Irurzun (Navarra) (ES)
(74) Representative: Urizar Anasagasti, Jesus Maria
(86) International application number: PCT/ES2006/070006
(87) International publication number: WO 2007/042590

(57) **Abstract**

The invention relates to a machine for tightening the conductor cables of overhead electrical lines, particularly cables that include a core formed by a steel cable which is tightened between two points. The inventive machine consists of a structure (19) having one end comprising securing means (18) and another end comprising at least one hydraulic or pneumatic cylinder (11) with a second support structure (12) which, together with the first structure (19), is equipped with conical retaining means (13-14) through which the steel core (21) of the conductor (2) that is to be mounted can pass. The aforementioned retaining means only act in one direction such that, when the means are aligned in the same direction and when the cylinder (11) performs a compression movement, the retaining means mounted at the end (14) pulls the cable (21) and the front retaining means (13), which is mounted to the structure (1), allows the cable to pass freely. Moreover, when the piston returns to the stretching position, the front retaining means (13) retains the cable (21), while the retaining means (14) located at the end (12) of the piston slides along the length of the cable.

## Description

The present invention relates to a machine designed for tensioning conductor cables forming high-voltage overhead electric power lines.

The present invention also includes the method for tensioning said conductor cables of high-voltage overhead electric lines.

The tensioning machine and the proposed method are specifically applied to a type of conductor cables including a central strand formed by a steel cable on which a tubular sheath is incorporated, on which sheath a series of aluminium conductors is in turn wound or braided. A lubricant is applied between the central steel strand and the tubular sheath and there is a sufficient clearance to allow relative axial movement between both elements. In currently known cables, the tubular sheath separating the central steel strand from the outer conductors is formed by a plurality of aluminium conductor wires with a circular section, such that a predetermined series of wires forms a conduction around the inner central steel strand.

Once the cable is laid, tensioning is necessary; when dealing with this type of cables, this operation is carried out only by tensioning the central steel strand between two fixing points located in consecutively placed towers for high-tension lines, or in a section comprising several towers of which those located at the ends act as points for fixing and tensioning the cable and retaining it at one of the ends. The mechanical stress is thus supported only by the inner steel strand, whereas the electric conduction depends on the aluminium envelopment, which is not subjected to mechanical stress. The result of this assembly is that the aluminium conductors can withstand much higher temperatures (between 80° and 180°C.) than the conductors that are currently used (up to 80°C.), which in conclusion allows transporting a much higher load than which a conventional line can transport in extreme conditions and without added risks, and without the risk that the high temperature thereof, which logically gives rise to an expansion, causing an increase of the sag of the catenary, the most evident reason for which is the approximation of the power line to the ground.

### Background of the Invention

As has just been mentioned, there are currently cables for overhead electric power lines designed to work at high temperatures at punctual moments and with low sag which are based on the fact that the mechanical work is intended only for the central steel strand, the conductor layers being mechanically inert, which is achieved by leaving a certain clearance between the resistant central strand or steel cable and the conductor layers and lubricating this clearance between both layers in order to be able to pull the central steel strand and tension the cable between two points without the conductor sheath supporting mechanical stress.

In this type of cables, to carry out the tensioning it is necessary to loosen the conductor layers releasing wires one by one in a great length, leaving the resistant central strand on the outside in order to exclusively tension the latter to the specified tension. In this operation, the resistant central steel strand will undergo an elastic elongation of approximately 0.30%, which means that in a series of 1500 meters of laid cable, an elongation of around 4.5 meters will occur, so that it will be necessary to unbraid around 5 meters of conductor wires. The operations which must be carried out in order to carry out this operation are quite expensive because they logically include the recomposition of the conductor layers of the cable, which is not always normal because the wires become deformed during the operation. The additional difficulty of working outside the tower, involving the need to install a large work platform must also be taken into consideration. All these drawbacks limit the lengths of cables which can be installed and therefore this type of cables is hardly installed in practice given the high cost that this entails.

Document JP2002199569 describes a tool for adjusting the tension of a conventional overhead conductor cable which remains coupled to the cable in a section installed between two towers, and which is formed by a cylinder the length of which determines its maximum run. On the other hand, the machine of the invention allows tensioning conventional and special electric cables with a central steel strand and outer inert conductor layers, assembly by threading the cable through the retentions and it is removed from the line once the cable is tensioned and the run carried out by the cable to be tensioned is unlimited depending on how frequently the machine operates.

Document ES352072 is a cable locking element fixing the cable in a definitive manner, and the object of which is to install the cable in the line and especially insulated cables as indicated.

### Description of the Invention

The system described below has been designed modifying the current laying and tensioning method, facilitating said operation, carrying out this type of installations as if conventional conductors were being laid, in terms of methodology and required times. To that end, a machine is used which does not require any type of assembly, nor any structure added to the tower, because it is a low-length element fixed to the tower at one end and to the cable to be tensioned at the other end.

As indicated, this machine is preferably used for laying cables including a central strand formed by a steel cable, which is tensioned between two fixing points located in two towers for high-voltage lines, which is protected by a tubular sheath and by the aluminium conductor wires; all of this such that the axial movement of said central strand sliding inside said sheath is possible. Nevertheless, this machine can be used in other types of conductor cables, even conventional conductor cables, resulting equally operative and functional.

The machine of the present invention comprises a structure having at one end fastening means for the fastening to the tower, whereas at the other end it has at least one hydraulic or pneumatic cylinder which at one end forms a support, together with the structure, for respective conical retentions through which the central steel strand of the conductor to be assembled passes, said retentions acting only in one direction such that arranged in alignment and in the same direction, when the cylinder carries out a compression movement the retention assembled at the end of the piston pulls the cable, whereas the retention located in the previous structure allows it to pass freely; but when the piston returns to the distension position, the retention located in the previous structure retains the cable whereas the retention located at the end of said piston slides along the cable.

According to an important feature of the present invention, each of said retentions has an inner duct through which the central strand of the cable passes, which cable, at one of the ends finishes in a conical cavity in which a series of also conical clamps is assembled, a spring being placed between such clamps and the opposite end of the cavity, tending to keep them inserted in the conical bottom part such that they trap the central strand of the cable passing through the inside. These clamps have a rough surface at the inner face of contact with the cable, and a smooth surface at the outside to facilitate sliding; the pulling of the cable in the direction of exit through the conical end, or the movement of the clamp in the opposite direction thus causes the locking between both elements; whereas the movement of the cable towards the non-conical exit or of the clamp in the opposite direction allows the movement of the cable therein.

Two sleeves have been provided to facilitate the assembly of the conductor cables with a central steel strand and with enveloping conductor elements, both of which are located in front of the machine object of the present invention; the first sleeve is threaded in the conductor and is provided with a corresponding connecting blade, whereas the second sleeve is located in the central steel strand of the cable. During the cable tensioning operations, both sleeves respectively allow the sliding of the conductor and of the inner steel strand, but it is possible for both of them to be deformed by means of a suitable tool so as to interlock the corresponding element, central strand and conductor in the retention located in the suitable tower.

In a preferred embodiment, this machine of formed by two parallel cylinders the base of which is joined to the transverse structure, whereas their respective pistons are joined to a rear structure, both of them being parallel and provided with the corresponding retaining clamps. In an alternative embodiment, this machine is formed by a single cylinder having the retaining clamps at their base and at the end of the piston respectively.

As regards the method for laying and tensioning conductor cables for overhead electric power lines used by the machine of the invention, it must be indicated that it comprises the following phases:
a) laying the cable between two consecutively placed towers for high-voltage lines or in a section comprising several towers of which those located at the ends act as points for fixing and tensioning the cable and retaining it at one of the ends, such that it is definitively installed including insulation and carrying out the compression as in a conventional cable;
b) retaining provisionally to the second tower by means of an outer casing and cutting the cable at the height thereof, as well as carrying out an operation for baring the central strand of the cable, removing the conductor layer, from an already calculated position depending on the length of the cable to be laid;
c) threading the compression sleeve of the conductor with its connecting blade and the compression sleeve of the central steel strand; as well as threading the machine anchored at a point close to the definitive anchoring;
d) actuating the machine as previously described, until the central strand of the cable is tensioned to the predetermined value, marked by a dynamometer indicating the tension it is subjected to;
e) carrying out the compression in the plunger of the central steel strand and retaining it in the tower to finally release the machine, cutting the excess steel of the central strand and interleaving the insulators and the corresponding tensioning device between the plunger and the fixing to the tower.

The operations carried out with the machine of the present invention for anchoring and fixing the conductor cable when such cable is of the type including a central steel strand and an aluminium conductor sheath, are similar to the operations performed for installing a conventional aluminium conductor, with the additional particularity that it does not require the assembly of any platform in the tower or any auxiliary element, the operations being carried out quickly, simply and precisely.

The machine of the present invention can also be intended for tensioning conventional conductor cables.

### Description of the Drawings

To complement the description which is being made and for the purpose of facilitating the understanding of the features of the invention, a set of drawings is attached to this specification, in which the following has been represented with an illustrative and non-limiting character:
Figure 1 shows an elevational or plan view of the machine object of the present invention, as well as a detail of one of the retentions (13-14) forming one of its main features.
Figure 2 shows an elevational view of an alternative machine, in this case with a single piston.
Figures 3 to 12 shows the different phases for developing the method for lying and tensioning conductor cables of overhead electric power lines using the machine object of the present invention.
Figure 13 shows respective plan and side elevational views of the sleeve (6) threaded and fixed at the end of the central strand of the steel cable (21).

### Preferred Embodiment of the Invention

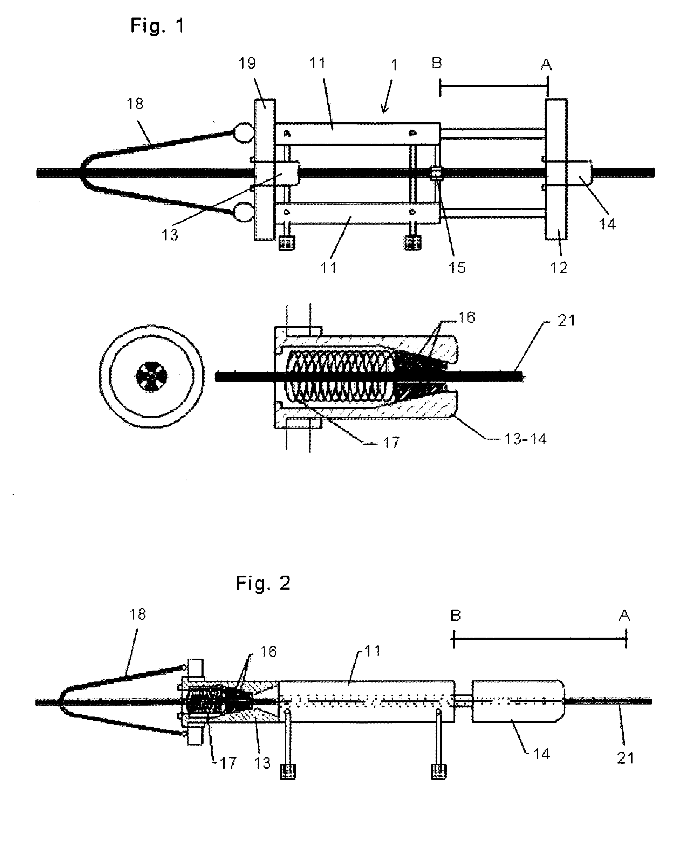

As can be observed in Figure 1, the machine (1) of the present invention is formed by a system of two parallel hydraulic cylinders (11) assembled in a structure (19), the pistons of which are joined to another common structure or support (12), having aligned conical retentions (13-14) described below and an intermediate cable guide (15). These cylinders are connected to a hydraulic or pneumatic system, such that they carry out successive compression and distension cycles, successively passing from position "A" to position "B" and vice versa, pulling the cable and retaining it until the cable is tensioned up to a pre-calculated force. For the fastening to the tower, the machine (1) has a sling (18) at the rear face, opposite to the cylinders (11).

The conical retentions (13-14) have a longitudinal cavity, which at one of its ends finishes in a cone in which three or four clamps (16) are located, which clamps are internally rough but externally smooth; the central strand (21) of the cable passing therethrough is thus retained when a movement (of said cable or the clamp itself) occurs tending to insert the clamps (16) at the bottom of the conical cavity, whereas a force in the opposite direction allows the relative sliding of the cable (21) when the clamps (16) move in the opposite direction, slightly compressing spring (17).

Figure 2 shows a machine with a single plunger, instead of two as in the example shown in Figure 1; in this case the shaft is hollow, the corresponding clamps (13-14) being assembled in the same direction so that their operation is an alternate gripping and sliding as described in the previous example.

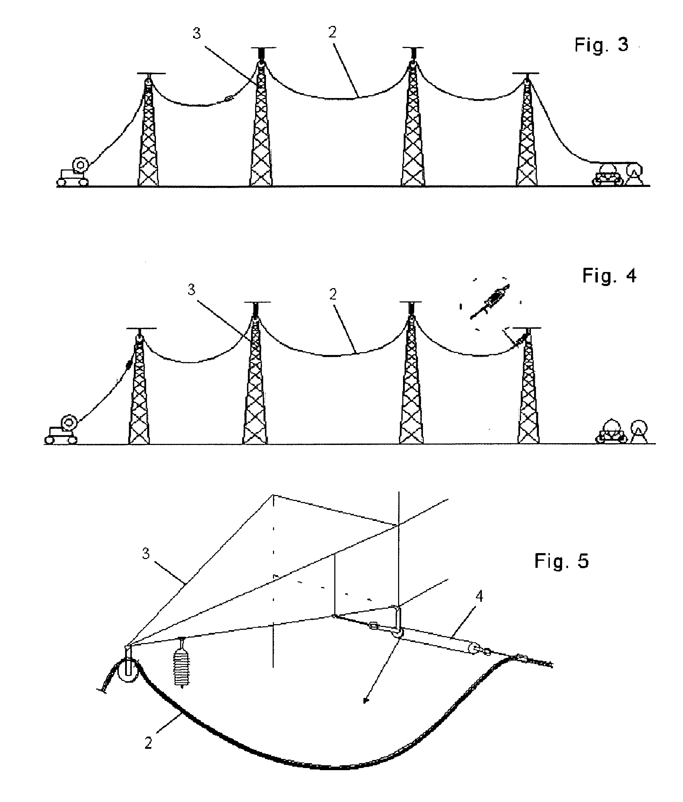

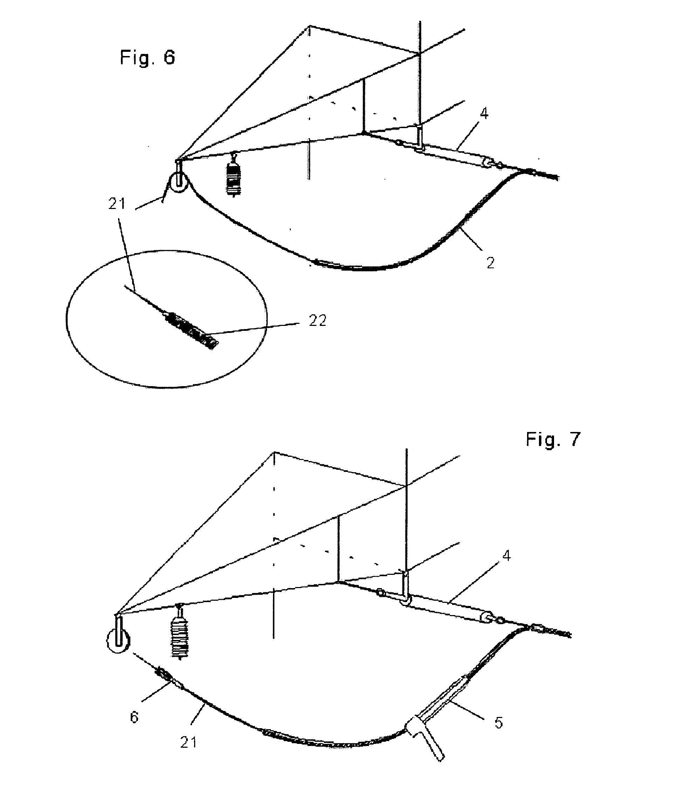

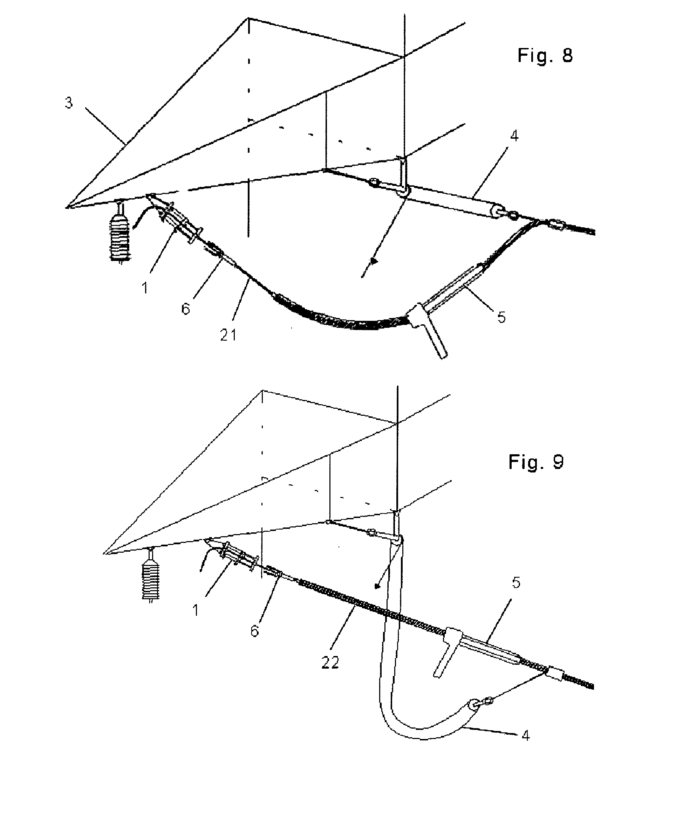

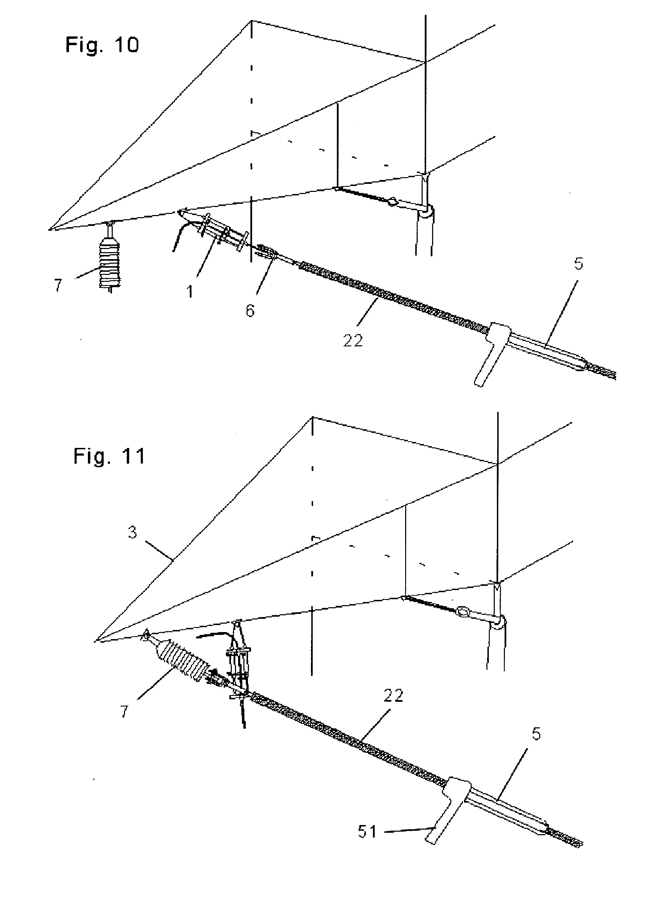

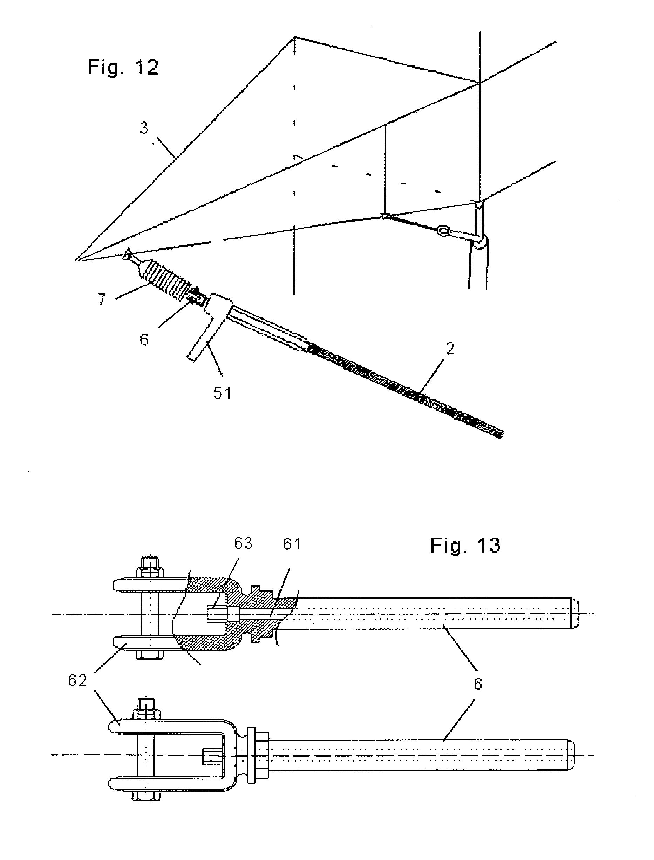

The practical system for laying and tensioning the cable is carried out in the following manner, the first two figures being understood as orienting a conventional laying.
1. The cable (2) is laid conventionally by means of the laying and braking machine in a line section comprising several towers (3) in this case. See Figure 3.
2. Once the cable (2) is laid, it is retained such that at one of the sides it is definitively installed including insulation and carrying out the compression as in a conventional cable. See Figure 4.
3. It is provisionally retained to the tower (3) by means of an outer casing (4) as shown in Figure 5.
4. The cable (2) is cut at the height of the tower (3), and the central strand (21) is bared by removing the conductor layer (22) from an already calculated position depending on the length of the cable to be laid and always by default in order to ensure that it does not fall short; all of this as shown in Figure 6.
5. The compression sleeve (5) of the conductor is threaded with its connecting blade (51) and the compression sleeve (6) of the central steel strand (21). See figure 7.
6. The machine (1) object of this invention anchored at a point of the tower (3) close to the definitive anchoring is then threaded. The machine is actuated alternately as previously described. If it were necessary to bare a greater length of the central strand during tensioning, it could be done by means of simple tools for that purpose. See Figures 8, 9 and 10.
7. When the dynamometer indicates the suitable tension in the central strand (21) of the cable, the plunger (6) of the central strand (21) is compressed, the length of the chain is measured and then the sleeve (5) is retained on the conductor (2) and the machine is released, the steel is cut by means of a tool designed for that purpose, the insulators (7) and the corresponding tensioning device are interleaved. See Figures 11 and 12.

Figure 13 shows the sleeve (6) of the central strand (21) of the conductor having a cable anchor (62) to the corresponding tensioning device and a longitudinal hole (61) through which the central strand (21) passes by sliding while the cable tensioning operations last; when these operations end, it is deformed by means of a tool to retain the central strand (21). This hole has a finishing (62) to which there is coupled a plug preventing the passage of water therein which might accelerate the oxidation process of the central steel strand (21).

Having sufficiently described the nature of the invention as well as a preferred embodiment, it is stated for all effects and purposes that the materials, shape, size and arrangement of the described elements can be modified, provided that this does not involve an alteration of the essential features of the invention claimed below:

## Claims

1. A machine for tensioning conductor cables of overhead electric power lines, particularly cables including a central strand formed by a steel cable, which is tensioned between two fixing points located in two towers for high-voltage lines, protected by means of a tubular sheath on which a bundle of aluminium conductor cables is braided, with the particularity that there is a certain clearance between the resistant central strand or steel cable and the conductor layers, which clearance is suitably lubricated so that the axial movement of the central steel strand is possible and it can be tensioned between two points without the conductor sheath supporting mechanical stress, **characterized in that** it comprises a structure (19) having at one end fastening means (18) for the fastening to a tower in which an electric conductor cable (2) which has been retained in another tower will be assembled, and having at the end opposite to said attachment (18) at least a hydraulic or pneumatic cylinder (11) having a second structure (12) for supporting, together with said structure (19), respective conical retentions (13-14) through which the central steel strand (21) of the conductor (2) to be assembled passes, said retentions acting only in one direction, such that arranged in alignment and in the same direction, when the cylinder (11) carries out a compression movement from position "A" to position "B" the retention assembled at end (14) pulls the cable (21), whereas the previous retention (13) assembled in structure (1) allows it to pass freely; whereas when the piston returns to the distension position, from position "A" to position "B" the retention (13) located in the previous structure retains the cable (21) whereas the retention (14) located at the end (12) of said piston slides along the cable (21) .

2. A machine according to the previous claim, **characterized in that** each of said retentions (13-14) has an inner duct through which the central strand of cable (21) passes, which cable at one of its ends finishes in a conical cavity in which a series of also conical clamps (16) are assembled, with the interposition of a spring (17) tending to keep them inserted at the bottom, trapping the cable (21) passing through the inside, these clamps (16) having a rough surface at the inner face of contact with the cable, and a smooth surface at the outside to facilitate the sliding; such that the pulling of the cable in the direction of exit through the conical end, or the movement of the retention in the opposite direction causes the locking between both elements, whereas the movement of the cable towards the non-conical exit or of the retention in the opposite direction allows the movement of the cable therein.

3. A machine according to the previous claims, **characterized in that** a compression sleeve (5) of the conductor (2), provided with a connecting blade (51), and a second compression sleeve (6) of the central steel strand (21) are threaded in the central steel strand (21), in front of the machine (1) object of the present invention, both sleeves allowing the sliding of the conductor (2) and of the inner steel strand (21) respectively and with the ability to retain the corresponding element when the element is deformed by means of a suitable tool.

4. A machine according to the previous claims, **characterized in that** a preferred embodiment is formed by two parallel cylinders (11) the base of which is joined to the transverse structure (19), whereas their respective pistons are joined to a rear structure (12), both of which structures are parallel and provided with the corresponding retaining clamps (13) and (14), respectively.

5. A machine according to claims 1 to 3, **characterized in that** in an alternative embodiment, it has a single cylinder having a hollow shaft and retaining clamps respectively assembled at its base (13) and at the end of the piston (14).

6. A method for tensioning conductor cables of overhead electric power lines used by the machine of the previous claims, comprising a first phase for laying the cable between two consecutively placed towers (3) for high-voltage lines, or in a section comprising several towers of which the towers located at the ends act as points for fixing and tensioning the cable (2) and retaining it at one of the ends, such that it is definitively installed with an included insulation and carrying out the compression as in a conventional cable; the provisional retention to the second tower by means of an outer casing; and cutting the cable at the height of said tower, as well as carrying out an operation for baring the central strand (21) of the cable, removing the conductor layer (22) from an already calculated position depending on the length of the cable to be laid; **characterized in that** for the tensioning of the cable it comprises the following steps:
a) threading the compression sleeve (5) of the conductor (2), with its connecting blade (51) and the compression sleeve (6) of the central steel strand (21); as well as threading the machine (1) anchored at a point close to that of the definitive anchoring (7);
b) actuating the machine (1) as previously described, until the central strand of the cable (21) is tensioned to the predetermined value, marked by a dynamometer indicating the tension it is subjected to;
c) carrying out the compression in the plunger of the central steel strand (21) and retaining it in the tower (3), to finally release the machine, cutting the excess steel of the central strand (21), and interleaving the insulators (7) and the corresponding tensioning device between the plunger and the fixing to the tower (3).
